# EUROPÄISCHE PATENTSCHRIFT

(11) **EP 2 759 362 B1**
(45) Veröffentlichungstag und Bekanntmachung des Hinweises auf die Patenterteilung: **04.05.2016**
(21) Anmeldenummer: 14151461.2
(22) Anmeldetag: 16.01.2014
(51) Int. Cl.: B23B 31/20, B23B 31/40

(54) **Spanneinrichtung**
Clamping device
Dispositif de serrage

(30) Priorität: 23.01.2013 DE 102013201071
(43) Veröffentlichungstag der Anmeldung: 30.07.2014
(73) Patentinhaber: Hainbuch GmbH Spannende Technik, 71672 Marbach (DE)
(72) Erfinder: Weller, Hans-Michael, 71563 Affalterbach (DE)
(74) Vertreter: Patentanwaltskanzlei Cartagena

(56) Entgegenhaltungen:
- DE-A1- 19 853 525
- GB-A- 553 933
- JP-U- S61 159 110
- US-A- 4 856 797

## Beschreibung

Die Erfindung betrifft ein Spannmittel in Art eines Außenspannmittels gemäß dem Oberbegriff des Anspruchs 1 oder eines Innenspannmittels gemäß dem Oberbegriff des Anspruchs 2 zum Festlegen von Werkstücken, welches insbesondere zum Zwecke der Rotationsbearbeitung vorgesehen ist. Dabei weist ein solches Spannmittel je nach Ausgestaltung als Außenspannmittel oder als Innenspannmittel ein entlang einer in Axialrichtung erstreckten Mittelachse erstrecktes Gehäuse auf, wobei die Mittelachse im Falle eines Rotationsspannmittels die Drehachse des drehbaren Gehäuses darstellt. Weiterhin verfügt ein solches Spannmittel über gegenüber dem Gehäuse zum Zweckes des Spannens und Entspannens in Axialrichtung bewegliches Betätigungsorgan, über eine Spannhülse bzw. einen Spanndorn und über eine Mehrzahl von Spannsegmenten, die innerhalb der Spannhülse bzw. außerhalb des Spanndorns angeordnet sind und zur Kraftbeaufschlagung des Werkstücks dienen.

Weiterhin verfügt im Falle eines Außenspannmittels die Spannhülse für jedes Spannsegment an ihrer Innenseite über eine gegenüber der Axialrichtung schräg gestellte Führungsfläche. Im Falle eines Innenspannmittels verfügt der Spanndorn für jedes Spannsegment an seiner Außenseite über eine solche gegenüber der Axialrichtung schräg gestellte Führungsfläche. Dabei können diese jeweiligen Führungsflächen der Spannsegmente allerdings auch von einer gemeinsamen, insbesondere konischen Führungsfläche gebildet sein.

Weiterhin verfügen korrespondierend dazu die Spannsegmente jeweils an ihrer Außenseite (im Falle eines Außenspannmittels) oder ihrer Innenseite (im Falle eines Innenspannmittels) über eine gegenüber der Axialrichtung entsprechend schräg gestellte Gleitfläche. Die Spannhülse bzw. der Spanndorn einerseits und die Gesamtheit der Spannsegmente andererseits sind in Axialrichtung gegeneinander relativverlagerbar, um hierdurch bei axialer Relativverlagerung eine radiale Verlagerung der Spannsegmente zu erzielen. Zum Zwecke der Herstellung dieser Axialrelativbewegung sind bei einer möglichen Gestaltung die Spannhülse bzw. der Spanndorn axial ortsfest am Gehäuse und die Spannsegmente axial ortsfest am Betätigungsorgan angebracht. Bei einer Variante hierzu sind die Spannhülse bzw. der Spanndorn axial ortsfest am Betätigungsorgan und die Spannsegmente axial ortsfest am Gehäuse angebracht. Auch möglich ist eine Gestaltung, bei der der Spanndorn bzw. die Spannhülse einerseits und die Spannsegmenten andererseits jeweils gegenüber dem Gehäuse verlagerbar sind, wobei sie mittels eines Getriebes zur gegenläufigen gegenüber dem Gehäuse Verlagerung ausgebildet sind.

Gattungsgemäße Spannmittel sind aus dem Stand der Technik allgemein bekannt. Ein solches Spannmittel ist zum Beispiel aus der US-A-4 856 797 bekannt. Sie dienen der Festlegung eines Werkstücks zum Zwecke der nachfolgenden Bearbeitung dieses Werkstücks, wobei es sich insbesondere um eine rotative Bearbeitung handeln kann, bei der das Werkstück um die Drehachse rotiert. Insbesondere kann es sich um eine Drehbearbeitung handeln. Zum Zwecke des Spannens sind die Spannsegmente vorgesehen, welche durch axiale Relativverlagerung der aneinander abgleitenden Führungsflächen auf Seiten der Spannhülse oder des Spanndorns und Gleitflächen auf Seiten der Spannsegmente radial verlagerbar sind. Im Falle eines Außenspannmittels umgreifen diese Spannsegmente das Werkstück von außen. Dies ist beispielsweise für die Bearbeitung von Wellen zweckmäßig. Im Falle eines Innenspannmittels beaufschlagen die Spannsegmente das Werkstück durch eine radiale Verlagerung nach außen. Sie werden zu diesem Zweck im Bereich einer Bohrung oder einer anderweitigen Ausnehmung des Werkstücks angeordnet.

Da die Spannsegmente bei einem gattungsgemäßen Spannmittel neben ihrer axialen Relativbeweglichkeit gegenüber der Spannhülse bzw. dem Spanndorn auch eine radiale Beweglichkeit bezogen auf die Mittelachse / Drehachse aufweisen müssen, können sie mit dem Betätigungsorgan oder dem Gehäuse des Spannmittels nicht fest verbunden sein. Um die gewünschte Ortsfestigkeit relativ zum Betätigungsorgan oder relativ zum Gehäuse zu erzielen, ist es bei bekannten Spannmitteln üblich, eine bezogen auf die Radialrichtung lagetolerante formschlüssige Kopplung vorzusehen, beispielsweise zwischen dem gemeinsamen Betätigungsorgan und allen Spannsegmenten.

Bei bekannten Spannmitteln ist diese Kopplung üblicherweise an den proximalen Enden der Spannsegmente vorgesehen, wobei die Begriffe "proximal" und "distal" im Zusammenhang mit diesem Dokument derart zu verstehen sind, dass aus Perspektive des Spannmittels die proximale Richtung in Richtung der Werkzeugmaschine weist und die distale Richtung in Richtung des durch das Spannmittel eingespannten Werkstücks weist. Diese Kopplung am proximalen Ende der Spannsegmente führt in Axialrichtung zu vergleichsweise großen Abmessungen des Spannmittels. Zudem befindet sich die Kopplung in einem nur schwer gegen eindringenden Schmutz schützbaren Bereich, so dass die Gefahr einer Verschmutzung und einer dadurch verursachten Betriebsstörung gegeben ist.

### Aufgabe und Lösung

Aufgabe der Erfindung ist es, ein gattungsgemäßes Spannmittel dahingehend weiterzubilden, dass die Gefahr des Verschmutzens im Kopplungsbereich zwischen Betätigungsorgan oder Gehäuse einerseits und Spannsegmenten andererseits verringert wird. Weiterhin ist Aufgabe der Erfindung, ein axial kurzes Spannmittel zur Verfügung zu stellen.

Erfindungsgemäß wird dies dadurch erzielt, dass zur axial ortsfesten Kopplung der Spannsegmente an das Gehäuse oder an das Betätigungsorgan mindestens ein Kopplungselement vorgesehen ist, welches axial ortsfest zum Gehäuse oder zum Betätigungsorgan vorgesehen ist und welches in einem Kopplungsbereich zwischen einem in Axialrichtung distalen Führungsflächenbereich der Führungsfläche und einem in Axialrichtung proximalen Führungsflächenbereich der Führungsfläche axial formschlüssig mit mindestens einem Spannsegment im Eingriff steht.

Für die Komponenten eines erfindungsgemäßen Spannmittels gilt Folgendes: Unter einem Gehäuse des Spannmittels wird ein Abschnitt desselben verstanden, welcher gegenüber der jeweiligen Werkzeugmaschine zur axial ortsfesten Positionierung vorgesehen ist. Das Gehäuse ist gegenüber der Werkzeugmaschine im Regelbetrieb somit im Falle eines zur rotativen Bearbeitung vorgesehen Spannmittels lediglich drehbeweglich. Im Falle eines Spannmittels zur nicht-rotativen Bearbeitung ist das Gehäuse gegenüber der Werkzeugmaschine unbeweglich. Bei dem Betätigungsorgan handelt es sich um ein vorzugsweise innerhalb des Gehäuses angeordnetes Bauteil, welches durch die Werkzeugmaschine axial gegenüber dem Gehäuse verlagerbar ist, um ein Entspannen und Spannen des Spannmittels möglich zu machen. Die Spannhülse ist ein die Spannsegmente umgebendes Bauteil, welches durch seine Wechselwirkung mit den Spannsegmenten deren radiale Verlagerung bewirkt. Im Falle eines Innenspannmittels ist statt der Spannhülse ein Spanndorn vorgesehen, der abgesehen vom Unterschied, dass er statt außerhalb der Spannsegmente innerhalb derselben angeordnet ist, hinsichtlich seiner Funktion mit der Funktion der Spannhülse übereinstimmt. Wenngleich es als grundsätzlich zweckmäßig angesehen wird, dass entweder die Spannsegmente oder aber der Spanndorn bzw. die Spannhülse axial ortsfest zum Gehäuse und somit zur Werkzeugmaschine vorgesehen sind, sind auch Ausgestaltungen denkbar, bei denen die Relativbewegung zwischen Spannhülse bzw. Spanndorn einerseits und Spannsegmenten andererseits dadurch erzielt wird, dass beide in gegenläufiger Richtung gegenüber dem Gehäuse verlagerbar sind.

Die Mehrzahl von Spannsegmenten umfasst mindestens zwei Spannsegmente. Stark bevorzugt ist jedoch eine Gestaltung mit mehr als zwei Spannsegmenten, insbesondere mit drei oder mehr Spannsegmenten. Insbesondere Gestaltungen mit vier, sechs oder acht Spannsegmenten sind in der Praxis zweckmäßig.

Die Spannsegmente sind vorzugsweise zu einem Spannsegmentring gefügt, in welchem die einzelnen Spannsegmente durch in Tangentialrichtung dehnbare Zwischensegmente miteinander verbunden sind. Hierdurch sind die Spannsegmente als Einheit handhabbar.

Die Spannhülse bzw. der Spanndorn einerseits und die Spannsegmente andererseits weisen Führungsflächen bzw. Gleitflächen auf, die aneinander bei Benutzung anliegen und die gegenüber der Axialrichtung schräg gestellt sind. Vorzugsweise schließt die Axialrichtung mit den Gleitflächen bzw. den Führungsflächen einen Winkel von weniger als 20° ein. Durch die Schrägstellung der Führungsflächen und der Gleitflächen wird bewirkt, dass die Relativbewegung der Führungsflächen gegenüber den Gleitflächen auch eine radiale Verlagerung der Spannsegmente und somit ein Spannen oder Entspannen bewirkt. Die Führungsfläche und die Gleitfläche können sich im permanenten Flächenkontakt befinden, wobei es hierfür jeweils ebener Führungsflächen und Gleitflächen bedarf. In der Praxis können stattdessen jedoch auch Führungs- und Gleitflächen Verwendung finden, die die Formgebung eines Teilabschnitts einer Konusfläche aufweisen. Bei derart geformten Führungs- und Gleitflächen ist ein vollständiger Flächenkontakt nicht in permanenter Weise gegeben, da die axiale Relativverlagerbarkeit dem entgegensteht. Allerdings ist die Spaltweite zwischen Führungs- und Gleitflächen im Betrieb hier sehr gering, so dass annähernd Flächenkontakt besteht.

Zum Zwecke der Erzielung der bezogen auf eine Axialbewegung gewünschten Koppelung zwischen den Spannsegmenten einerseits und dem Gehäuse oder aber dem Betätigungsorgan andererseits sind die erfindungsgemäß vorgesehenen Kopplungselemente vorgesehen, bei welchen es sich vorzugsweise um in Axialrichtung erstreckte Bolzen handelt, an deren distalem Ende eine Formgebung gegeben ist, die eine formschlüssige Koppelung an die Spannsegmente gestattet. Diese Kopplungselemente, von denen vorzugsweise mindestens eines je Spannsegment vorgesehen ist, ragen bis in einen Kopplungsbereich, in welchem die formschlüssige Kopplung an die Spannsegmente gegeben ist. Wie bereits erläutert, ist diese Kopplung dergestalt, dass eine radiale Verlagerung der Spannsegmente möglich bleibt, obwohl die Kopplungselemente selbst vorzugsweise radial unbeweglich sind. Dieser Kopplungsbereich ist abweichend vom Stand der Technik nicht am proximalen Ende der Spannsegmente und somit auf der proximalen Seite der Führungsflächen vorgesehen, sondern bezogen auf die Axialrichtung zwischen einem distalen Ende der Führungsfläche und einem proximalen Ende der Führungsfläche. Die Führungsfläche am Spanndorn bzw. der Spannhülse erstreckt sich somit in Axialrichtung beidseitig des Kopplungsbereichs.

Hierdurch wird erreicht, dass im Betrieb eine Verschmutzung des Kopplungsbereichs weitgehend vermieden werden kann, da dieser zumindest bei vollständig montiertem Spannmittel zu beiden Seiten hin durch die direkt oder annähernd aneinander anliegenden Führungsflächen und Gleitflächen geschützt ist. Da auf der proximalen Seite der Spannsegmente keinerlei spannsegmentseitiger Kopplungsmechanismus vorgesehen sein muss, wird somit in Axialrichtung eine vergleichsweise geringe Baugröße bei einem erfindungsgemäßen Spannmittel möglich.

Neben den grundsätzlich unterschiedlichen Spannmitteln in Art einen Innenspannmittels oder eines Außenspannmittels, die abweichend voneinander zur Erzeugung einer radial nach außen wirkenden bzw. einer radial nach innen wirkenden Spannkraft ausgebildet sind, unterscheiden sich erfindungsgemäße Spannmittel voneinander durch die Art der Relativbeweglichkeit. Bei einer ersten Gestaltung, die ebenso wie die zweite Gestaltung sowohl bei einem Innenspannmittel als auch bei einem Außenspannmittel realisierbar ist, ist der Spanndorn bzw. die Spannhülse in axialer Richtung gegenüber dem Gehäuse unbeweglich. Die Spannsegmente sind demgegenüber bezogen auf die Axialrichtung an dem Betätigungsorgan mittels der Kopplungselemente ortsfest befestigt, wobei ein in Axialrichtung wirkendes Spiel hierfür unschädlich ist. Die genannte Ortsfestigkeit des Betätigungsorgans zu den Spannsegmenten bezieht sich auf die Verhältnisse während des Spannens. Da bei dieser Gestaltung die Spannsegmente gegenüber dem Gehäuse axial und radial zum Zwecke des Spannens bewegt werden, ist auch eine Verlagerung des Werkstücks in Axialrichtung während des Spannens gegeben. Die zweite Variante der Ausgestaltung eines Innenspannmittels oder eines Außenspannmittels verhindert dies. Bei dieser zweiten Gestaltung sind die Spannsegmente axial ortsfest am Gehäuse vorgesehen, während die radiale Beweglichkeit der Spannsegmente unverändert gegeben ist. Diese radiale Bewegung wird in einem solchen Fall dadurch erzielt, dass der Spanndorn bzw. die Spannhülse gegenüber dem Gehäuse beweglich ist und hierfür am Betätigungsorgan angebracht ist. Bei dieser zweiten Variante bewegen sich die Spannsegmente rein radial, so dass eine axiale Verlagerung des Werkstücks während des Spannens nicht auftritt. Grundsätzlich ist darüber hinaus auch eine Gestaltung denkbar, bei der in gegenläufiger Art und Weise der Spanndorn bzw. die Spannhülse einerseits und die Spannsegmente andererseits gegeneinander verlagerbar sind.

Grundsätzlich ist es möglich, die Führungsfläche des Spanndorns bzw. der Spannhülse dahingehend zweiteilig auszugestalten, dass der distale Führungsflächenbereich oder der proximale Führungsflächenbereich an zwei getrennten, jedoch im Betrieb stets zueinander ortsfesten Bauteilen vorgesehen sind. Von Vorteil ist jedoch eine Gestaltung, bei der die Führungsflächenbereiche, die einem Spannsegment zugeordnet sind, Teil eines einstückigen Bauteils sind. Insbesondere, jedoch nicht ausschließlich, bei einer solchen einteiligen Gestaltung, wird es vorteilhaft angesehen, wenn im Spanndorn bzw. in der Spannhülse mindestens ein über seinen Umfang geschlossener Kopplungskanal vorgesehen ist, durch den hindurch das Kopplungselement vom Gehäuse oder dem Betätigungsorgan bis in den Kopplungsbereich geführt ist. Ein solcher Kopplungskanal ist in vorteilhafter Weise in der Lage, eine Verkantungen entgegenwirkende Führung für das Kopplungselement darzustellen. Dabei sind das Kopplungselement und der Kopplungskanal vorzugsweise derart aufeinander abgestimmt, dass sie eine enge Spielpassung bilden. Das Spiel des Kopplungselementes gegenüber dem Kopplungskanal in zur Axialrichtung orthogonaler Richtung beträgt vorzugsweise weniger als 1 mm.

Vorzugsweise ist je Spannsegment mindestens ein Kopplungselement vorgesehen. Weiterhin ist vorzugsweise für jedes Kopplungselement ein eigener Kopplungskanal vorgesehen.

Die vorzugsweise stangenartig oder bolzenartig ausgebildeten Kopplungselemente weisen vorzugsweise an ihrem distalen Ende eine Einschnürung und eine sich daran in distaler Richtung anschließende Aufweitung zur Herstellung des Formschlusses auf. Dabei ist insbesondere vorzugsweise ein Querschnitt des Kopplungselements auch im Bereich der Aufweitung nicht größer als der minimale freie Querschnitt des Kopplungskanals. Unter einer Einschnürung wird in diesem Kontext verstanden, dass das Kopplungselement zwischen dem Betätigungsorgan oder dem Gehäuse zugeordneten Ende und seinem gegenüberliegenden distalen Ende einen Bereich verringerten Querschnitts aufweist, wobei diese Querschnittsverringerung gegenüber insbesondere dem distal aufgeweiteten Ende gegeben sein sollte. Dieses distal aufgeweitete Ende ist dafür vorgesehen, formschlüssig mit dem ihm zugeordneten Spannsegment zusammenzuwirken, um die genannte axiale Kopplung zu bewirken. Um das hierfür erforderliche Hintergreifen zu realisieren, ist die genannte Einschnürung von Vorteil. Durch eine Ausgestaltung des distalen Endes dahingehend, dass dieses den Querschnitt des Kopplungskanals nicht überschreitet, ist eine einfache Montagemöglichkeit gegeben, bei der das Kopplungselement von der proximalen Seite aus durch den Kopplungskanal bis in den Kopplungsbereich geschoben wird. Die Bohrung für den Kopplungskanal muss daher nicht so ausgestaltet werden, dass das Kopplungselement von der Führungsfläche aus einschiebbar ist.

Zur Montage des Spannsegmentrings muss dieser in formschlüssigen Eingriff mit den distalen Enden der Kopplungselemente gebracht werden. Dies ist dadurch möglich, dass der Spannsegmentring vorzugsweise aufgrund seiner elastischen Zwischensegmente je nach Ausgestaltung des Spannmittels als Innenspannmittel oder Außenspannmittel elastisch aufgeweitet oder zusammengestaucht werden kann, um die formschlüssige Kopplung herzustellen.

Zur Vereinfachung der Montage ist es jedoch von Vorteil, wenn die Gesamtheit der Spannsegmente an den Spanndorn bzw. die Spannhülse derart angepasst ist, dass eine Montage der Spannsegmente am Spannmittel in Art eines Bajonettverschlusses möglich ist. Gemäß dieser Weiterbildung ist vorgesehen, dass eine durch zwei Relativbewegungen gekennzeichnete Montagebewegung vorgesehen ist. Zunächst werden die Spannsegmente in einer gegenüber ihrem Betriebszustand verdrehten Stellung in axialer proximaler Richtung auf den Spanndorn aufgeschoben oder in die Spannhülse eingeschoben, um dann um eine zur Axialrichtung identischen Drehachse / Mittelachse gedreht zu werden. Dabei bietet es sich insbesondere an, eine Montagedrehstellung vorzusehen, in die die zur Herstellung des Formschlusses vorgesehene Abschnitte der Kopplungselemente bezogen auf die Umfangsrichtung im Bereich der Zwischensegmente angeordnet sind. Der Bereich der Zwischensegmente wird somit in Art einer Axialnut verwendet, um die Spannsegmente zunächst axial in Richtung ihrer Betriebsstellung zu verlagern.

Um anschließend die genannte Verdrehung realisieren zu können, ist vorzugsweise an den Gleitflächen der Spannsegmente eine bezogen auf die Achsrichtung und Umfangsrichtung erstreckte Montagenut vorgesehen. Innerhalb dieser Montagenut sind die für den Formschluss verantwortlichen Enden der Kopplungselemente während der Montagedrehbewegung der Spannsegmente angeordnet. Trotz der Bezeichnung als Montagenut ist vorzugsweise vorgesehen, dass die besagten Enden der Kopplungselemente auch im Betrieb in jener Nut verbleiben und dass unmittelbar an dieser Nut die Krafteinleitung von den Kopplungselementen in die Spannsegmente erfolgt. Die Montagenut erstreckt sich vorzugsweise in asymmetrischer Art ausgehend von den Zwischensegmenten des Spannsegmentrings bis etwa zur Mitte der Gleitfläche der Spannsegmente bezogen auf eine Umfangsrichtung, so dass durch Anschlagen der Enden der Kopplungselemente am Ende der Montagenuten für den Monteur erkennbar ist, dass die für den Betrieb gewünschte Drehstellung erreicht ist.

Insbesondere im Falle eines Innenspannmittels wird es vorteilhaft angesehen, wenn eine die Spannsegmente umfassende Wechseleinheit vorgesehen ist, die zusätzlich zu den Spannsegmenten auch einen gemeinsamen umlaufenden Handhabungsring aufweist, der mit den Spannsegmenten drehgesichert verbunden ist. Dieser Handhabungsring erleichtert die Handhabung der Spannsegmente während der Montage. Er kann zusätzlich dafür benutzt werden, die Drehstellung der Spannsegmente zum Spanndorn bzw. zur Spannhülse zu sichern, indem der Handhabungsring in einer definierten Drehstellung beispielsweise am Gehäuse verschraubt wird.

Als zusätzliche oder alternative Drehsicherung ist es vorzugsweise vorgesehen, dass an der Spannhülse mindestens ein sich radial nach innen erstreckender bzw. am Spanndorn mindestens ein sich radial nach außen erstreckender Drehsicherungsabschnitt vorgesehen ist, der im montierten Zustand der Spannsegmente bis in eine primär in Axialrichtung erstreckte Axialnut an der Gleitfläche mindestens eines Spannsegments erstreckt ist. Durch einen solchen Drehsicherungsabschnitt wird unmittelbar zwischen dem Spannsegmentring und der Spannhülse bzw. dem Spanndorn eine Drehsicherung geschaffen.

Das Spannmittel ist vorzugsweise dahingehend ausgestaltet, dass es zwischen einem Betriebszustand und einem Wechselzustand umschaltbar ist, wobei die Relativbeweglichkeit des Betätigungsorgans und des Gehäuses im Wechselzustand größer ist als im Betriebszustand. Hierbei meint der Betriebszustand den Zustand, in welchem das Spannmittel genutzt wird und umfasst somit sowohl den gespannten als auch den ungespannten Zustand des Spannmittels. Der Wechselzustand meint einen Zustand, in welchem die Trennung der Spannsegmente von der Spannhülse bzw. dem Spanndorn möglich ist. Durch eine vergrößerte Relativbeweglichkeit im Wechselzustand kann der Wechsel erleichtert oder je nach Ausgestaltung auch erst ermöglicht werden. Durch die Umschaltbarkeit des Spannmittels zwischen dem Wechselzustand und dem Betriebszustand ist gleichzeitig gewährleistet, dass die Wechselmöglichkeit nicht unbeabsichtigt hergestellt wird und zu einem unbeabsichtigten Lösen der Spannsegmente vom Spanndorn bzw. der Spannhülse führt. Die vergrößerte Relativbeweglichkeit kann beispielsweise dafür genutzt werden, die Kopplungselemente gegenüber der Spannhülse oder dem Spanndorn weiter als im Betriebszustand in distaler Richtung zu verfahren, so dass dann zum Trennen der Spannsegmente vom Spanndorn bzw. der Spannhülse ein geringerer Grad an Verformung des Spannsegmentrings erforderlich ist. Im Kontext mit dem genannten Bajonettsystem ist es jedoch von besonderem Vorteil, wenn die erhöhte Relativbeweglichkeit im Wechselzustand dahingehend genutzt wird, dass erst im genannten Wechselzustand eine Beweglichkeit des beschriebenen Drehsicherungsabschnitts in der Montagenut gegeben ist. Erst durch Überführung des Spannmittels in den Wechselzustand gelangt der Drehsicherungsabschnitt in die Montagenut.

### Kurzbeschreibung der Zeichnungen

Weitere Aspekte und Vorteile der Erfindung ergeben sich aus den Ansprüchen sowie aus bevorzugten Ausführungsbeispielen, die nachfolgend anhand der Figuren erläutert werden. Dabei zeigen:
- Fig. 1a bis 1d: eine erste Variante eines erfindungsgemäßen Außenspannmittels,
- Fig. 2a und 2b: eine zweite Variante eines erfindungsgemäßen Außenspannmittels,
- Fig. 3a bis 3c: eine erste Variante eines erfindungsgemäßen Innenspannmittels und
- Fig. 4a und 4b: eine zweite Variante eines erfindungsgemäßen Innenspannmittels.

### Detaillierte Beschreibung der Ausführungsbeispiele

Die Figuren zeigen vier Varianten von Spannmitteln, denen gemein ist, dass sie zur Anbringung an einer Spindel einer Werkzeugmaschine vorgesehen sind und dem Festspannen eines Werkstücks zum Zwecke der nachfolgenden spanenden Bearbeitung dienen. Im Betrieb rotieren die Spannmittel 100, 200, 300, 400 mitsamt dem damit eingespannten Werkstück um eine Drehachse 2. An ihrem in den Darstellungen jeweils linksseitigen proximalen Ende sind sie an besagter Spindel der Werkzeugmaschine angebracht. An ihrem in den Figuren rechtsseitigen distalen Ende verfügen sie jeweils über einen Spannsegmentring 110, 210, 310, 410, der zum unmittelbaren Kontakt mit dem zu bearbeitenden Werkstück vorgesehen ist und der jeweils aus einer Mehrzahl von Spannsegmenten 112, 212, 312, 412 sowie dazwischenliegenden elastisch verformbaren Zwischenabschnitten 114, 214, 314, 414 besteht. Zum Zwecke des Spannens sind die Spannsegmente 112, 212, 312, 412 jeweils bezogen auf die Drehachse 2 radial durch die Spannmittel 100, 200, 300, 400 verlagerbar.

Grundsätzlich betrifft die Erfindung auch stationäre, also nichtrotative, Spannmittel. Diese können identisch zu den hier darstellten ausgebildet sein. Sie können jedoch auch eine hiervon abweichende und insbesondere aufgrund von Unwuchten oder dergleichen zur rotativen Verwendung nicht geeignete Gestaltungen aufweisen.

Im Falle der beiden Außenspannmittel 100, 200 erfolgt zum Zwecke des Einspannens eine Verlagerung der Spannsegmente 112, 212 in Richtung der Drehachse 2, so dass ein Werkstück von außen festspannbar ist. Im Falle der Innenspannmittel 300, 400 erfolgt das Einspannen durch eine radiale Bewegung der Spannsegmente 312, 412 nach außen, so dass ein Einspannen im Bereich einer Bohrung eines Werkstücks möglich ist.

Bei den Außenspannmitteln 100, 200 ist jeweils eine Retativverlagerbarkeit zwischen dem Spannsegmentring 110, 210 einerseits und einer Spannhülse 130, 230 in Bezug auf eine Axialrichtung 4 andererseits gegeben. Im Falle der Innenspannmittel 300, 400 ist dagegen eine Relativverlagerbarkeit zwischen den Spannringen 310, 410 und einem von diesen umgebenen Spanndorn 330, 430 in Axialrichtung 4 gegeben. Um durch diese jeweils gegebene Relativbeweglichkeit in Axialrichtung 4 eine radiale Verlagerbarkeit der Spannsegmente 112, 212, 312, 412 zu bewerkstelligen, weisen die Spannhülsen 130, 230 und die Spanndorne 330, 430 jeweils eine in Richtung des Spannsegmentrings 110, 210, 310, 410 gerichtete Führungsfläche 134, 234, 334, 434 auf, die gegenüber der Drehachse 2 geneigt ist. Korrespondierend hierzu sind die den Spannhülsen 130, 230 bzw. den Spanndornen 330, 430 zugewandten Seiten der Spannsegmente 112, 212, 312, 412 mit schräg gestellten Gleitflächen 116, 216, 316, 416 versehen. Ein axiale Relativverlagerung der Spannsegmentringe 110, 210, 310, 410 gegenüber den Spannhülsen 130, 230 bzw. Spanndornen 330, 430 führt aufgrund des Abgleitens der Gleitflächen an den Führungsflächen zur gewünschten radialen Verlagerung der Spannsegmente und somit zum gewünschten Spannen bzw. Entspannen der Spannmittel 100, 200, 300, 400.

Bei allen vier Ausführungsbeispielen ist vorgesehen, dass zur Erzielung der gewünschten Relativverlagerung in Axialrichtung 4 ein gegenüber einem jeweiligen Gehäuse 102, 202, 302, 402 in Axialrichtung 4 verlagerbares Betätigungsorgan 140, 240, 340, 440 vorgesehen ist, welches durch die Werkzeugmaschine in Axialrichtung 4 gegenüber dem Gehäuse verlagerbar ist, um das Spannen und Entspannen der Spannmittel zu bewerkstelligen.

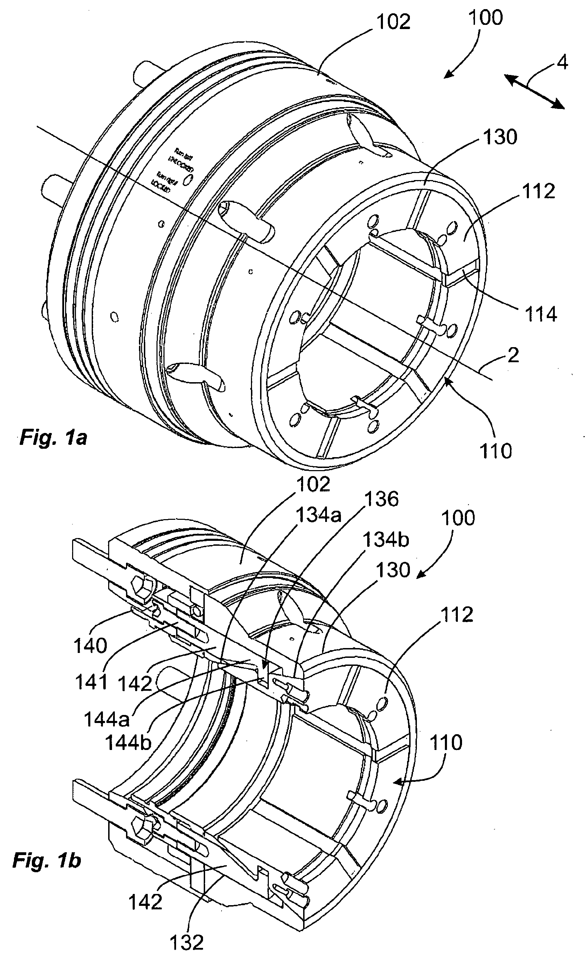

Bezug nehmend auf die Ausgestaltung der Fig. 1a bis 1d ist vorgesehen, dass die Spannhülse 130 ortsfest zum Gehäuse 102 verbleibt. Zur axialen Relativverlagerung der Spannhülse 130 und des Spannsegmentrings 110 gegeneinander ist daher eine axiale Verlagerung des Spannsegmentrings 110 gegenüber dem Gehäuse 102 erforderlich. Hierfür sind am Betätigungsorgan 140 insgesamt sechs bolzenartige Kopplungselemente 142 mittels Schrauben 141 festgeschraubt, von denen in der Schnittdarstellung der Fig. 1b zwei zu erkennen sind. Diese bolzenartigen Kopplungselemente 142 erstrecken sich vom gemeinsamen Betätigungsorgan 140 durch Kopplungsbohrungen 132 in der Spannhülse 130. Die Kopplungselemente 142 weisen an ihrem distalen Ende zunächst einen verjüngten Bereich 144a und sich hieran in distaler Richtung anschließend einen aufgeweiteten Bereich 144b auf. Der aufgeweitete Bereich 144b erstreckt sich über den verjüngten Bereich 144a radial nach innen und in tangential erstreckte Nuten 120 der Spannsegmente 112 hinein. Hierdurch ist es möglich, durch eine Verlagerung des Betätigungsorgans 140 zusammen mit den Kopplungselementen 142 eine gemeinsame axiale Verlagerung der Spannsegmente 112 zu bewirken.

Dabei liegt eine entscheidende Besonderheit darin, dass der Kopplungsbereich 136, in welchem das Kopplungselement 140 formschlüssig an den Segmentring 110 angekoppelt ist, in Axialrichtung 4 zwischen einem distalen Führungsflächenbereich 134b und einem proximalen Führungsflächenbereich 134a angeordnet ist. Dies gestattet es, auf eine am proximalen Ende der Spannsegmente vorgesehene Kopplungsmöglichkeit derselben mit dem Betätigungsorgan 140 zu verzichten und dadurch in Axialrichtung 4 eine geringe Baugröße des Spannmittels 100 zu erzielen. Weiterhin wird hierdurch erreicht, dass der Kopplungsbereich 136, in welchem die Kopplung zwischen den Kopplungselementen 142 und den Spannsegmenten 112 erfolgt, gegen Verschmutzung weitgehend geschützt ist. Da die Gleitflächen 116 der Spannsegmente 112 zumindest annähernd flächig an der Führungsfläche 134 der Spannhülse 130 anliegen, ist der Kopplungsbereich 136 vor Schmutz wirksam geschützt.

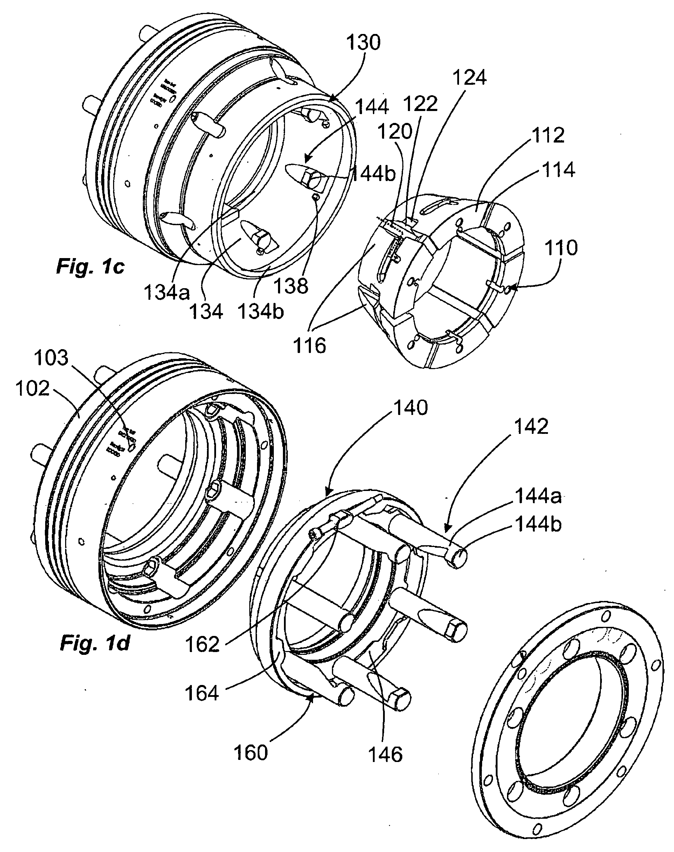

Anhand der Fig. 1c wird nochmals der Aufbau des Spannelements 100 verdeutlicht. Hier ist zu erkennen, dass die Führungsfläche 134 des Spannmittels 130 durch die sechs in Axialrichtung 4 erstreckten Kopplungsbohrungen 132 unterbrochen wird, welche in schon beschriebener Weise die Kopplungselemente 142 aufnehmen. Bezug nehmend auf die Fig. 1b ist gut zu erkennen, dass die Kopplungselemente 142 in diesen Bohrungen 136 weitgehend spielfrei geführt sind, so dass einem Verkanten der Kopplungselemente 142 wirksam entgegengewirkt wird. Der Fig. 1c ist weiterhin zu entnehmen, dass an der Führungsfläche 134 der Spannhülse 130 weiterhin Drehsicherungsbolzen 138 vorgesehen sind. Diese Drehsicherungsbolzen 138 ragen im Normalbetrieb in von den Nuten 120 an den Spannsegmenten 112 abgehende Axialnuten 122. Im Betrieb, also im gespannten und ungespannten Zustand sowie beim Wechsel zwischen gespanntem und ungespanntem Zustand, verlassen die Drehsicherungsbolzen 138 diese jeweiligen Axialnuten 122 nicht. Es wird somit wirksam verhindert, dass der Spannsegmentring 110 sich in ungewollter Weise gegenüber der Spannhülse 130 verdreht.

Um dennoch eine einfache Trennbarkeit des Spannsegmentrings 110 von der Spannhülse 130 zur Verfügung zu erzielen, ist eine Verlagerbarkeit des Betätigungsorgans 140 und der Kopplungselemente 142 in distale Richtung gegeben, die über die Verlagerbarkeit im Betrieb, also beim Wechsel zwischen Spannzustand und ungespanntem Zustand, hinausgeht. Zur Erläuterung der Steuerung dessen wird auf Fig. 1d verwiesen. Aus dieser Figur lässt sich insbesondere das Gehäuse 102, das Betätigungsorgan 140 sowie die daran angebrachten und axial erstreckten Kopplungselemente 142 entnehmen. Zusätzlich ist in dieser reduzierten Explosionsdarstellung ein Schaltring 160 dargestellt, der mittels einer Schraube 162 um die Drehachse 2 gedreht werden kann. Zugänglich ist diese Schraube 162 durch eine Bohrung 103 am Gehäuse 102. Der Schaltring 160 verfügt über nach innen weisende Nocken 164. Korrespondierend hierzu sind am Betätigungsorgan 140 radial nach innen weisende Ausnehmungen 146 vorgesehen. Dies führt dazu, dass in Abhängigkeit der Drehstellung des Schaltrings 160 eine reduzierte und eine vergrößerte Verlagerbarkeit des Betätigungsorgans 140 mit den Kopplungselementen 142 in distale Richtung gegeben ist. Im Normalbetrieb, also im gespannten oder ungespannten Zustand oder beim Wechsel zwischen gespanntem und ungespanntem Zustand, sind die Ausnehmungen 146 und die Nocken 164 in Umfangsrichtung gegeneinander versetzt, so dass die Relativbeweglichkeit des Betätigungsorgans 140 und der Kopplungselemente 142 gegenüber dem Gehäuse 102 reduziert ist.

Zum Zwecke der Montage/Demontage kann der Schaltring 160 jedoch auch in eine Drehstellung gebracht werden, in der eine vergrößerte Relativbeweglichkeit gestattet. Wenn bei dieser größeren Relativbeweglichkeit das Betätigungsorgan 140 und die Kopplungselemente 142 bis in ihre distale Endlage verfahren werden, so gelangen hierdurch die Drehsicherungsbolzen 138 aus der Axialnut 122 heraus in die Tangentialnut 120. Sobald dies gegeben ist, liegen die Voraussetzungen für eine manuelle Demontage des Spannsegmentrings 110 vor. Ausgehend von dieser Stellung wird zum Zwecke der Demontage dann eine Drehbewegung des Spannsegmentrings 110 um etwa 30° vorgenommen, bis das Ende 144b der Kopplungselemente 142 jeweils in Umfangsrichtung im Bereich eines Zwischenabschnitts 114 zwischen den Spannsegmenten 112 angeordnet ist und die Drehsicherungsbolzen 138 jeweils im Bereich einer Entnahmeaussparung 124 angeordnet sind. Ist dieser Zustand erreicht, so kann der Spannsegmentring in axialer Richtung entnommen werden. Der Montagevorgang erfolgt in umgekehrter Reihenfolge. Auch hier wird zunächst der Schaltring 160 so verlagert, dass eine vergrößerte Beweglichkeit zwischen dem Betätigungsorgan 140 und den Kopplungselementen 142 einerseits und der Spannhülse 130 andererseits gegeben ist. Dann wird der Spannsegmentring 110 axial eingeführt, um ca. 30° gedreht. Abschließend wird der Schaltring 160 wieder in jene Drehstellung gebracht, in der er die Relativbewegung limitiert, nachdem zuvor das Spannorgan 140 in Axialrichtung 4 in Richtung des proximalen Endes des Spannmittels verfahren wurde. Zur Verdeutlichung ist der Weg eines Drehsicherungsbolzens 138 beim Einsetzen / Entnehmen des Spannsegmentrings 110 in Fig. 1c durch eine gepunktete Linie dargestellt.

Der Schaltring 160 stellt nur eine exemplarische Möglichkeit zur Veränderung der Relativbeweglichkeit dar. Es können auch andere Mittel, die die Relativbeweglichkeit beschränken, stattdessen Verwendung finden. Im einfachsten Falle wäre durch eine radial einschraubbare Schraube eine Begrenzung der Beweglichkeit ebenfalls erzielbar.

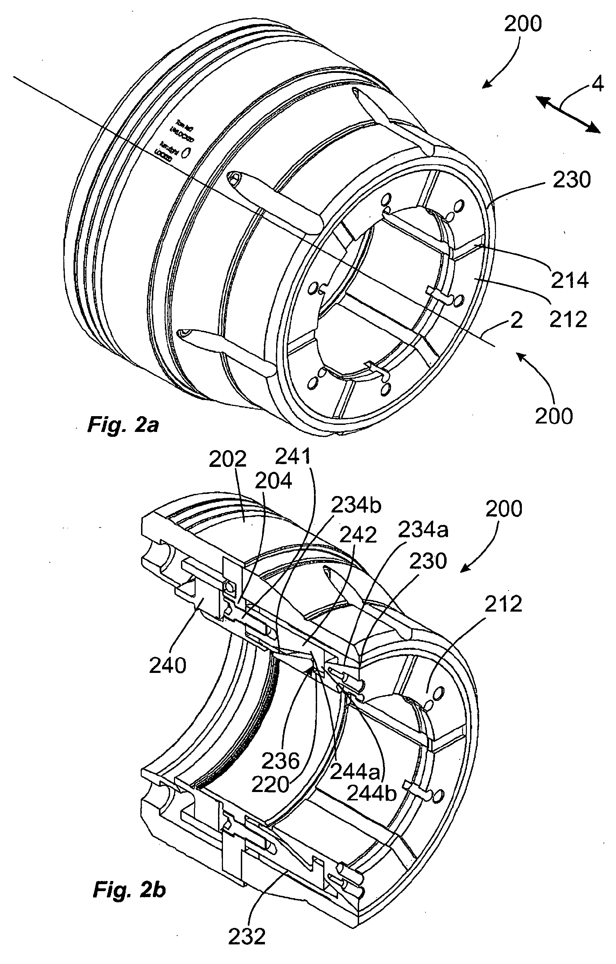

Das Spannmittel 200 der Fig. 2a und 2b ist ebenfalls, wie bereits erläutert, ein Außenspannmittel. Der maßgebliche Unterschied zur Gestaltung der Fig. 1a bis 1d liegt darin, dass eine axiale Beweglichkeit der Kopplungselemente 240 und damit der Spannsegmente 212 gegenüber dem Gehäuse 202 nicht gegeben ist. Die Kopplungselemente 242 sind durch Schrauben 241 fest mit einer zum Gehäuse gehörigen Ringplatte 204 verbunden. Um dennoch die radiale Beweglichkeit der Spannsegmente 212 zu erzielen, ist stattdessen die Spannhülse 230 gegenüber dem Gehäuse 202 in Axialrichtung 4 verlagerbar. Hierfür ist die Spannhülse 230 fest mit dem Betätigungsorgan 240 verbunden und wird mit diesem gemeinsam axial bewegt. Diese Verbindung der Spannhülse 230 mit dem Betätigungsorgan 240 erfolgt mittels in den Figuren nicht dargestellter Verbindungstegen, die die Ringplatte 204 durchdringen.

Der Vorteil dieser Gestaltung mit axial ortsfesten Spannsegmenten 212 liegt darin, dass ein Einspannen eines Werkstücks nicht mit einer Axialverlagerung dieses Werkstücks einhergeht.

Im Übrigen ist in nicht näher dargestellter Art und Weise die Art der Trennung des Spannsegmentrings 210 vom übrigen Spannmittel 200 in gleicher Weise wie bei der Ausgestaltung der Fig. 1a bis 1d, also mit bajonettartigem System, vorgesehen.

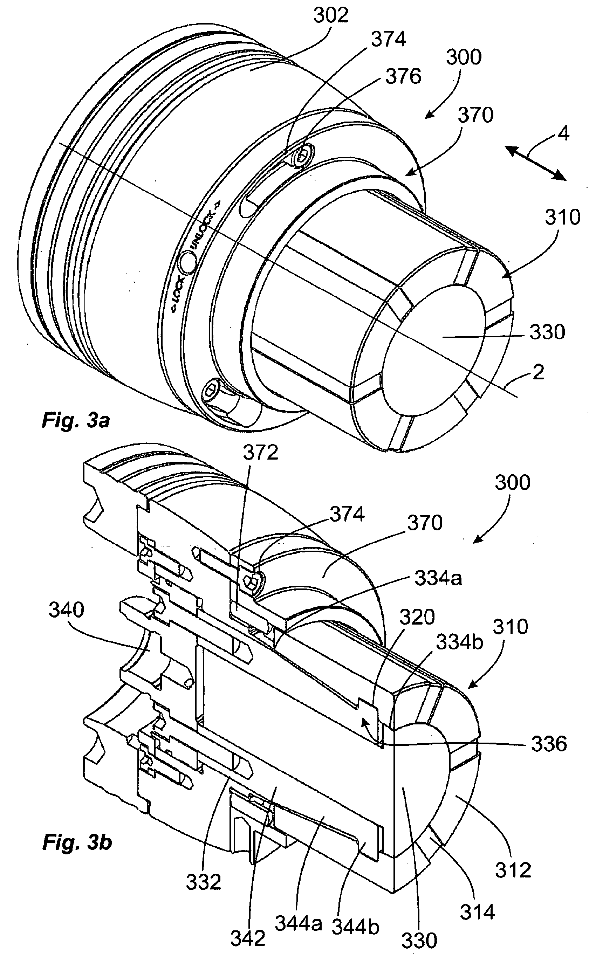

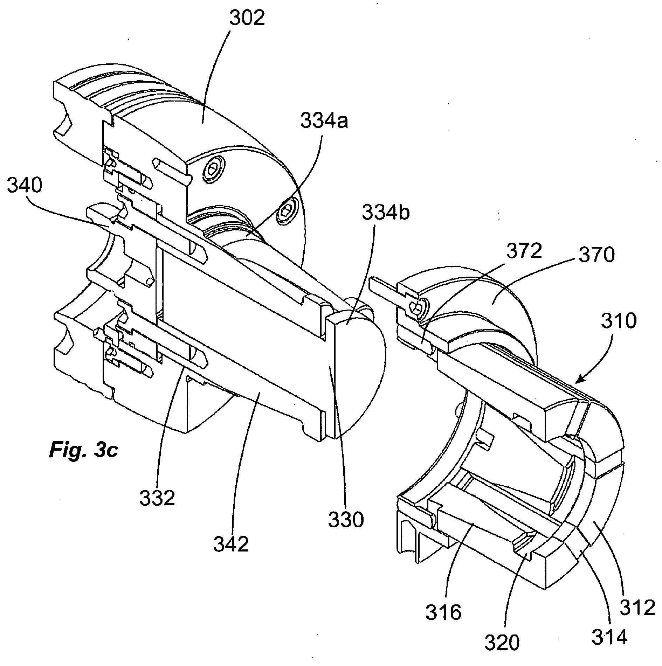

Die Ausgestaltung der Fig. 3a bis 3c unterscheidet sich in der eingangs bereits erläuterten Weise insbesondere dadurch von den vorangegangenen beiden Ausführungsformen, dass es sich um ein Innenspannmittel handelt. Statt der Spannhülse 130 ist ein konischer Spanndorn 330 vorgesehen, wie insbesondere in Fig. 3c gut ersichtlich ist. In diesem konischen Spanndorn 330 sind für jedes der sechs Spannsegmente 312 Kopplungskanäle 332 vorgesehen, die in Axialrichtung 4 erstreckt sind und durch die hindurch sich jeweils ein an einem gemeinsamen Betätigungsorgan 340 angebrachtes Kopplungselement 342 erstreckt. In ähnlicher Art und Weise wie bei den vorangegangenen Ausführungsformen sind diese Kopplungselemente 342 an ihrem distalen Ende 344b dafür ausgebildet, formschlüssig in nach innen weisende Tangentialnuten 320 der Spannsegmente 312 hineinzuragen, um hierdurch den für die axiale Relativbewegung erforderlichen Formschluss herzustellen. Abweichend von den vorangegangenen Gestaltungen wird die gewünschte Verdrehsicherung hergestellt. Zum Zwecke der Herstellung dieser Verdrehsicherung ist ein Handhabungs- und Sicherungsring 370 vorgesehen, der mittels Sicherungsstiften 372 drehgesichert mit dem Spannsegmentring 310 verbunden ist. An diesem Handhabungs- und Sicherungsring 370 sind weiterhin in Umfangsrichtung erstreckte Langlöcher 374 vorgesehen, die ein Festschrauben des Handhabungs- und Sicherungsrings 370 am Gehäuse gestatten. Zum Zwecke der Montage wird die Einheit aus Spannsegmentring 310 und Handhabungs- und Sicherungsring 370 in gegenüber der Benutzungsstellung um etwa 30° verdrehter Stellung axial auf den Spannkonus 330 aufgeschoben. Die Enden 344b der Kopplungselemente 342 können daher im Bereich der Zwischensegmente 314 des Spannrings 310 bis auf Höhe der Tangentialnuten 320 im Spannsegmentring 310 einrücken. Anschließend wird die gesamte Einheit aus Handhabungs- und Sicherungsring 370 sowie Spannsegmentring 310 um etwa 30° verdreht. Hierdurch gelangen die Enden 344b der Kopplungselemente 342 in Eingriff mit den Tangentialnuten 320. In diesem Zustand werden die Langlöcher 374 durchdringende Sicherungsschrauben 376 festgezogen, so dass die gewünschte Verdrehsicherung gegeben gegenüber dem Gehäuse 302 ist.

Wie auch bei den beiden Außenspannmitteln 100, 200 ist auch bei diesem Innenspannmittel 300 die formschlüssige Kopplung der Spannsegmente 312 an die Kopplungselemente 342 in einem Kopplungsbereich 336 zwischen einem proximalen Führungsflächenbereich 334a und einem distalen Führungsflächenbereich 334b.

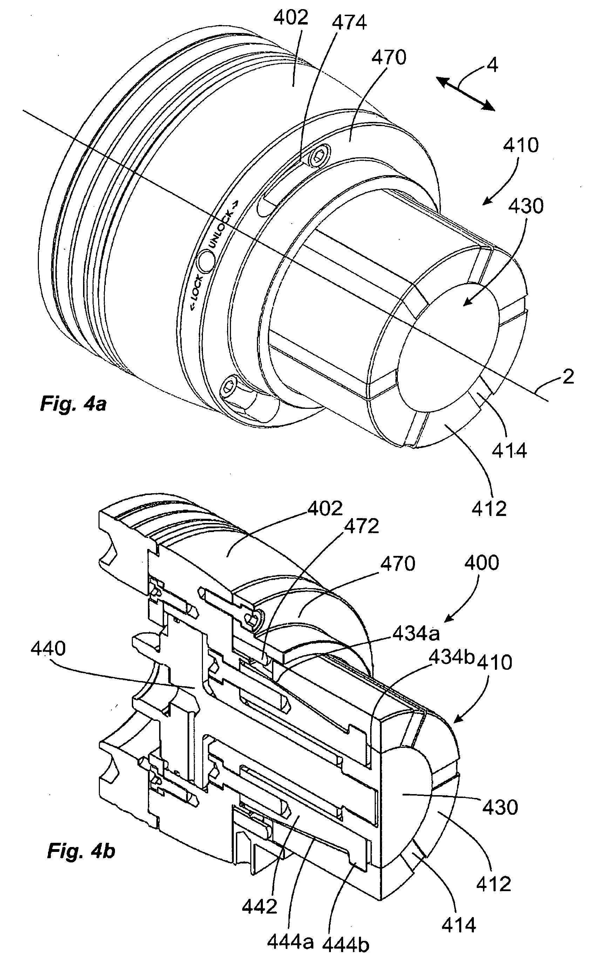

Bei der Ausgestaltung der Fig. 4 handelt es sich ebenso wie bei der Ausgestaltung der Fig. 3 um ein Innenspannmittel. Ebenso wie bei der Ausgestaltung der Fig. 2 ist es ein Spannmittel, welches Spannsegmente 412 aufweist, die gegenüber dem Gehäuse 402 axial unbeweglich sind. Auch bei der Ausgestaltung der Fig. 4a und 4b wird dies dadurch erzielt, dass die Kopplungselemente 442 in Bezug auf die Axialrichtung 4 ortsfest zum Gehäuse 402 festgeschraubt sind. Demgegenüber beweglich ist der Spanndorn 430 selbst, der zu diesem Zweck formschlüssig mit dem Betätigungsorgan 440 verbunden ist. Die Art und Weise der Handhabung des Spannsegmentrings 410 und des Sicherungs- und Handhabungsrings 470 unterscheidet sich nicht von der Ausgestaltung der Fig. 3a bis 3c.

## Patentansprüche

1. Spannmittel (100; 200) in Art eines Außenspannmittels zum Festlegen von Werkstücken, insbesondere zum Zwecke der Rotationsbearbeitung, mit
- einem in einer Axialrichtung (4) erstreckten Gehäuse (102; 202),
- einem gegenüber dem Gehäuse (102; 202) zum Zwecke des Spannens und Entspannens in Axialrichtung bewegliches Betätigungsorgan (140; 240),
- einer Spannhülse (130; 230), und
- einer Mehrzahl von Spannsegmenten (112; 212), die innerhalb der Spannhülse (130; 230) angeordnet sind zur Kraftbeaufschlagung des Werkstücks dienen,
wobei
- die Spannhülse (130; 230) für jedes Spannsegment (112; 212) an ihrer Innenseite eine gegenüber der Axialrichtung (4) schräggestellte Führungsfläche (134; 234) aufweist,
- die Spannsegmente (112; 212) jeweils an ihrer Außenseite eine gegenüber der Axialrichtung (4) schräggestellte Gleitfläche (116) aufweisen,
- die Spannhülse (130; 230) und die Gesamtheit der Spannsegmente (112; 212) in Axialrichtung (4) gegeneinander relativ verlagerbar sind, um hierdurch bei axialer Relativverlagerung eine radiale Verlagerung der Spannsegmente (112; 212) zu erzielen, und
- die Spannhülse (130) axial ortsfest am Gehäuse (102) und die Spannsegmente (112) axial ortsfest am Betätigungsorgan (140) angebracht sind oder die Spannhülse (230) axial ortsfest am Betätigungsorgan (240) und die Spannsegmente (212) axial ortsfest am Gehäuse (202) angebracht sind oder die Spannhülse und die Spannsegmente derart mit dem Betätigungsorgan gekoppelt sind, dass sie durch das Betätigungsorgan axial gegenläufig gegenüber dem Gehäuse verlagerbar sind,
**dadurch gekennzeichnet, dass**
zur axial ortsfesten Kopplung der Spannsegmente (112; 212) an das Gehäuse (202) oder an das Betätigungsorgan (140) mindestens ein Kopplungselement (142; 242) vorgesehen ist, welches axial ortsfest zum Gehäuse (202) oder zum Betätigungsorgan (140) vorgesehen ist und welches in einem Kopplungsbereich (136; 236) zwischen einem in Axialrichtung (4) distalen Führungsflächenbereich (134b; 234b) der Führungsfläche (134; 234) und einem in Axialrichtung proximalen Führungsflächenbereich (134a; 234a) der Führungsfläche (134; 234) axial formschlüssig mit mindestens einem Spannsegment (112; 212) im Eingriff steht.

2. Spannmittel (300; 400) in Art eines Innenspannmittels zum Festlegen von Werkstücken, insbesondere zum Zwecke der Rötationsbearbeitung, mit
- einem in Axialrichtung (4) erstreckten Gehäuse (302; 402),
- einem gegenüber dem Gehäuse (302; 402) zum Zwecke des Spannens und Entspannens in Axialrichtung bewegliches Betätigungsorgan (340; 440),
- einem Spanndorn (330; 430), und
- einer Mehrzahl von Spannsegmenten (312; 412), die den Spanndorn (330; 430) umgebend angeordnet sind zur Kraftbeaufschlagung des Werkstücks dienen,
wobei
- der Spanndorn (330; 430) für jedes Spannsegment (312; 412) an seiner Außenseite eine gegenüber der Axialrichtung (4) schräggestellte Führungsfläche (334; 434) aufweist,
- die Spannsegmente (312; 412) jeweils an ihrer Innenseite eine gegenüber der Axialrichtung schräggestellte Gleitfläche (316) aufweisen,
- der Spanndorn (330; 430) und die Gesamtheit der Spannsegmente (312; 412) in Axialrichtung gegeneinander relativ verlagerbar sind, um hierdurch bei axialer Relativverlagerung eine radiale Verlagerung der Spannsegmente (312; 412) zu erzielen, und
- der Spanndorn (330) axial ortsfest am Gehäuse (302) und die Spannsegmente (312) axial ortsfest am Betätigungsorgan (340) angebracht sind oder der Spanndorn (412) axial ortsfest am Betätigungsorgan (440) und die Spannsegmente (412) axial ortsfest am Gehäuse (402) angebracht sind oder der Spanndorn und die Spannsegmente derart mit dem Betätigungsorgan gekoppelt sind, dass sie durch das Betätigungsorgan axial gegenläufig gegenüber dem Gehäuse verlagerbar sind,
**dadurch gekennzeichnet, dass**
zur axial ortsfesten Kopplung der Spannsegmente (312; 412) an das Gehäuse (402) oder an das Betätigungsorgan (340) mindestens ein Kopplungselement (340; 440) vorgesehen ist, welches axial ortsfest zum Gehäuse (402) oder zum Betätigungsorgan (340) vorgesehen ist und welches in einem Kopplungsbereich (336; 436) zwischen einem in Axialrichtung distalen Führungsflächenbereich (334b; 434b) der Führungsfläche (334; 434) und einem in Axialrichtung proximalen Führungsflächenbereich (334b; 434b) der Führungsfläche (334; 434) axial formschlüssig mit mindestens einem Spannsegment (312; 412) im Eingriff steht.

3. Spannmittel (100; 200; 300; 400) nach einem der vorstehenden Ansprüchen,
**dadurch gekennzeichnet, dass**
die Spannsegmente (112; 212; 312; 412) einen fest gefügten Spannsegmentring (110; 210; 310; 410) bilden, in dem die einzelnen Spannsegmente durch tangential dehnbare Zwischensegmente (114; 214; 314; 414) miteinander verbunden sind, wobei der Spannsegmentring vorzugsweise mindestens drei, insbesondere vier, sechs oder acht Spannsegmente aufweist.

4. Spannmittel (100; 200; 300; 400) nach Anspruch 1 oder 2,
**dadurch gekennzeichnet, dass**
im Spanndorn (330; 430) bzw. in der Spannhülse (120; 230) mindestens ein über seinen Umfang geschlossener Kopplungskanal (132; 232; 332; 432) vorgesehen ist, durch den hindurch das Kopplungselement (142; 242; 342; 442) vom Gehäuse (202; 402) oder dem Betätigungsorgan (140; 340) bis in den Kopplungsbereich (136; 236; 336; 436) geführt ist.

5. Spannmittel (100; 200; 300; 400) nach einem der vorstehenden Ansprüche,
**dadurch gekennzeichnet, dass**
ein Schaft des Kopplungselements (142; 242; 342; 442) und der Kopplungskanal (132; 232; 332; 432) derart aufeinander abgestimmt sind, dass das Spiel quer zur Axialrichtung 1 mm nicht übersteigt.

6. Spannmittel (100; 200; 300; 400) nach Anspruch 1 oder 2,
**dadurch gekennzeichnet, dass**
je Spannsegment (112; 212; 312; 412) jeweils ein Kopplungselement (142; 242; 342; 442) vorgesehen ist.

7. Spannmittel (100; 200; 300; 400) nach einem der vorstehenden Ansprüche,
**dadurch gekennzeichnet, dass**
das Kopplungselement (142; 242; 342; 442) an seinem distalen Ende eine Einschnürung (144a; 244a; 344a; 444a) und eine sich daran anschließende Aufweitung (144b; 244b; 344b; 444b) zur Herstellung des Formschlusses aufweist, wobei vorzugsweise ein Querschnitt des Kopplungselements auch im Bereich der Aufweitung den freien Querschnitt des Kopplungskanals nicht überschreitet.

8. Spannmittel (100; 200; 300; 400) nach einem der vorstehenden Ansprüche,
**dadurch gekennzeichnet, dass**
die Gesamtheit der Spannsegmente (112; 212; 312; 412) an den Spanndorn (330; 430) bzw. die Spannhülse (130; 230) derart angepasst ist, dass eine Montage der Spannsegmente am Spannmittel in Art eines Bajonettverschlusses möglich ist.

9. Spannmittel (300; 400) nach Anspruch 8,
**dadurch gekennzeichnet, dass**
der Gesamtheit der Spannsegmente (312; 412) ein gemeinsamer umlaufender Handhabungsring (370; 470) zugeordnet ist, mit dem die Spannsegmente drehgesichert verbunden sind.

10. Spannmittel (100; 200) nach einem der Ansprüche 8 oder 9,
**dadurch gekennzeichnet, dass**
an den Gleitflächen (116) der Spannsegmente (112; 212) eine bezogen in Umfangsrichtung erstreckte Montagenut (120; 220) vorgesehen ist.

11. Spannmittel (100; 200) nach Anspruch 10,
**dadurch gekennzeichnet, dass**
die Montagenut (120; 220) in einen Zwischenbereich zwischen zwei benachbarten Spannsegmenten (112; 212) mündet.

12. Spannmittel (100; 200) nach einem der vorstehenden Ansprüche,
**dadurch gekennzeichnet, dass**
an der Führungsfläche (134; 234) des Spanndorns bzw. der Spannhülse (130; 230) ein Drehsicherungsabschnitt (138) vorgesehen ist, der sich in eine in Axialrichtung erstreckte Axialnut (122) an der Gleitfläche (116) des Spannsegments (112; 212) erstreckt.

13. Spannmittel (100; 200) nach einem der vorstehenden Ansprüche,
**dadurch gekennzeichnet, dass**
das Spannmittel (100; 200) zwischen einem Betriebszustand und einem Wechselzustand umschaltbar ist, wobei die Relativbeweglicheit des Betätigungsorgans und des Gehäuses im Wechselzustand größer ist als im Betriebszustand.

14. Spannmittel (100; 200) nach Anspruch 13,
**dadurch gekennzeichnet, dass**
die Relativbeweglichkeit
- im Betriebszustand derart beschränkt ist, dass der Drehsicherungsabschnitt (138) im Betriebszustand stets in der Axialnut (122) angeordnet ist und
- im Wechselzustand derart vergrößert ist, dass der Drehsicherungsabschnitt (138) bis in die Montagenut (120) einrücken kann.

15. Spannmittel (100; 200) nach einem der vorstehenden Ansprüche,
**dadurch gekennzeichnet, dass**
die innenseitige Führungsfläche (134; 234) der Spannhülse (130; 230) oder des Spanndorns (330; 430) eine sich in proximaler Richtung bzw. in distale Richtung verjüngende Konusabschnittsform oder eine sich in proximaler Richtung verjüngende negative Pyramidalform aufweist.

## Claims

1. A clamping device (100; 200) in the type of an outer clamping means for fixing of work pieces, in particular for the purpose of rotating processing, having
- a housing (102; 202) extended in an axial direction (4),
- an actuation member (140; 240) movable in axial direction in relation to the housing (102; 202) for the purpose of clamping and de-clamping,
- a clamping sleeve (130; 230), and
- a multitude of clamping segments (112; 212) and which are arranged inside the clamping sleeve (130; 230) serving for applying force to the work piece,
wherein
- the clamping sleeve (130; 230) comprises for each clamping segment (112; 212) at its inner side a guide surface (134; 234) inclined in relation to the axial direction (4),
- the clamping segments (112; 212) in each case comprise on their outer side a slide surface (116) inclined in relation to the axial direction (4),
- the clamping sleeve (130; 230) and the entirety of the clamping segments (112; 212) can be relatively displaced to one another in axial direction (4), in order to hereby achieve a radial displacement of the clamping segments (112; 212) in the case of axial relative displacement, and
- the clamping sleeve (130) is axially attached fixed in location to the housing (102) and the clamping segments (112) are axially attached fixed in location to the actuation member (140) or the clamping sleeve (230) is axially attached fixed in location to the actuation member (240) and the clamping segments (212) are axially attached fixed in location to the housing (202) or the clamping sleeve and the clamping segments are coupled to the actuation member such that they can be displaced axially in opposing directions in relation to the housing by means of the actuation member,
**characterized in that**
for axial fixed in location coupling of the clamping segments (112; 212) to the housing (202) or to the actuation member (140) at least one coupling element (142; 242) is provided, which is provided axially fixed in location to the housing (202) or to the actuation member (140) and which is engaged axially in a form-fit manner with at least one clamping segment (112; 212) in a coupling region (136; 236) between a guide surface region (134b, 234b) of the guide surface (134; 234) distal in axial direction (4) and a guide surface region (134a; 234a) of the guide surface (134; 234) proximal in axial direction.

2. A clamping device (300; 400) in the type of an inner clamping means for fixing work pieces, in particular for the purpose of rotating processing, having
- a housing (302; 402) extended in axial direction (4),
- an actuation member (340; 440) which can be moved in relation to the housing (302; 402) in axial direction for the purpose of clamping and de-clamping,
- a clamping mandrel (330; 430), and
- a multitude of clamping segments (312; 412) which are arranged surrounding the clamping mandrel (330; 430) and serving for the application of force to the work piece,
wherein
- the clamping mandrel (330; 430) comprises for each clamping segment (312; 412) on its outer side a guide surface (334; 434) inclined in relation to the axial direction (4),
- the clamping segments (312; 412) each comprise on their inner side a slide surface (316) inclined in relation to the axial direction,
- the clamping mandrel (330; 430) and the entirety of the clamping segments (312; 412) can be displaced in relation to one another in axial direction, in order to hereby achieve a radial displacement of the clamping segments (312; 412) in the case of axial relative displacement, and
- the clamping mandrel (330) is axially attached fixed in location to the housing (302) and the clamping segments (312) are axially attached fixed in location to the actuation member (340) or the clamping mandrel (412) is axially attached fixed in location to the actuation member (440) and the clamping segments (412) are axially attached fixed in location to the housing (402) or the clamping mandrel and the clamping segments are coupled to the actuation member such that they can be displaced axially in opposing direction in relation to the housing by means of the actuation member,
**characterized in that**
for axial fixed in location coupling of the clamping segments (312; 412) to the housing (402) or to the actuation member (340) at least one coupling element (340; 440) is provided, which is provided axially fixed in location to the housing (402) or to the actuation member (340) and which is engaged axially in a form-fit manner with at least one clamping segment (312; 412) in a coupling region (336; 436) between a guide surface region (334b, 434b) of the guide surface (334; 434) distal in axial direction and a guide surface region (334a; 434a) of the guide surface (334; 434) proximal in axial direction.

3. The clamping device (100; 200; 300; 400) according to any of the preceding claims, **characterized in that** the clamping segments (112; 212; 312; 412) form a firmly fitted clamping segment ring (110; 210; 310; 410) in which the individual clamping segments are interconnected by means of tangentially extendable intermediate segments (114; 214; 314; 414), wherein the clamping segment ring comprises preferably at least three, in particular four, six or eight clamping segments.

4. The clamping device (100; 200; 300; 400) according to claim 1 or 2, **characterized in that** in the clamping mandrel (330; 430) or in the clamping sleeve (120; 230) at least one coupling channel (132; 232; 332; 432) closed over its circumference is provided, through which the coupling element (142; 242; 342; 442) is guided from the housing (202; 402) or the actuation member (140; 340) up to the coupling region (136; 236; 336; 436).

5. The clamping device (100; 200; 300; 400) according to any of the preceding claims, **characterized in that** a shaft of the coupling element (142; 242; 342; 442) and the coupling channel (132; 232; 332; 432) are adapted to one another such that the clearance transverse to the axial direction does not surpass 1 mm.

6. The clamping device (100; 200; 300; 400) according to claim 1 or 2, **characterized in that** one coupling element (142; 242; 342; 442) is provided for each clamping segment (112; 212; 312; 412).

7. The clamping device (100; 200; 300; 400) according to any of the preceding claims, **characterized in that** the coupling element (142; 242; 342; 442) comprises at its distal end a necking (144a; 244a; 344a; 444a) and a widening (144b; 244b; 344b; 444b) successive thereto for achieving a form-fit connection, wherein preferably a cross-section of the coupling element does not exceed the free cross-section of the coupling channel also in the region of the widening.

8. The clamping device (100; 200; 300; 400) according to any of the preceding claims, **characterized in that** the entirety of the clamping segments (112; 212; 312; 412) is adapted to the clamping mandrel (330; 430) or to the clamping sleeve (130; 230) such that an installation of the clamping segments to the clamping means is possible in the type of a bayonet connection.

9. The clamping device (300; 400) according to claim 8, **characterized in that** to the entirety of the clamping segments (312; 412) a common, circumferential handling ring (370; 470) is assigned, to which the clamping segments are connected in a co-rotational manner.

10. The clamping device (100; 200) according to claim 8 or 9, **characterized in that** on the slide surfaces (116) of the clamping segments (112; 212), an installation groove (120; 220) is provided and extended in the circumferential direction.

11. The clamping device (100; 200) according to claim 10, **characterized in that** the installation groove (120; 220) ends in an intermediate area between two adjacent clamping segments (112; 212).

12. The clamping device (100; 200) according to any of the preceding claims, **characterized in that** on the guide surface (134; 234) of the clamping mandrel or the clamping sleeve (130; 230) a rotation lock section (138) is provided which extends in an axial groove (122) extending in axial direction on the slide surface (116) of the clamping segment (112; 212).

13. The clamping device (100; 200) according to any of the preceding claims, **characterized in that** the clamping means (100; 200) can be switched between an operational state and an exchange state, wherein the relative manoeuvrability of the actuation member and of the housing in the exchange state is greater than in the operational state.

14. The clamping device (100; 200) according to claim 13, **characterized in that** the relative manoeuvrability
- in the operational state is limited such that the rotation lock section (138) in the operational state is always arranged in the axial groove (122), and
- in the exchange state is increased such that the rotation lock section (138) can engage up to the installation groove (120).

15. The clamping device (100; 200) according to any of the preceding claims, **characterized in that** the internal guide surface (134; 234) of the clamping sleeve (130; 230) or of the clamping mandrel (330; 430) comprises a cone section shape tapering in the proximal direction or in the distal direction, or a negative pyramid shape tapering in the proximal direction.

## Revendications

1. Dispositif de serrage (100; 200) à la manière d'un dispositif de serrage extérieur pour la fixation de pièces, en particulier en vue d'un usinage en rotation, avec
- un corps (102; 202) s'étendant dans une direction axiale (4),
- un organe d'actionnement (140; 240) mobile en direction axiale par rapport au corps (102; 202) en vue du serrage et du desserrage,
- une douille de serrage (130; 230), et
- une multiplicité de segments de serrage (112; 212), qui sont disposés à l'intérieur de la douille de serrage (130; 230) pour l'application d'une force à la pièce,
dans lequel
- la douille de serrage (130; 230) présente sur son côté intérieur une face de guidage (134; 234) inclinée par rapport à la direction axiale (4) pour chaque segment de serrage (112; 212),
- les segments de serrage (112; 212) présentent respectivement sur leur côté extérieur une face de glissement (116) inclinée par rapport à la direction axiale (4),
- la douille de serrage (130; 230) et la totalité des segments de serrage (112; 212) sont mutuellement déplaçables en direction axiale (4), afin de produire ainsi un déplacement radial des segments de serrage (112; 212) lors d'un déplacement relatif axial, et
- la douille de serrage (130) est axialement fixe sur le corps (102) et les segments de serrage (112) sont axialement fixes sur l'organe d'actionnement (140) ou la douille de serrage (230) est axialement fixe sur l'organe d'actionnement (240) et les segments de serrage (212) sont axialement fixes sur le corps (202) ou la douille de serrage et les segments de serrage sont couplés à l'organe d'actionnement de telle manière qu'ils soient déplaçables axialement en sens inverse par rapport au corps au moyen de l'organe d'actionnement,
**caractérisé en ce qu'**il est prévu, pour le couplage axialement fixe des segments de serrage (112; 212), sur le corps (202) ou sur l'organe d'actionnement (140) au moins un élément de couplage (142; 242), qui est prévu de façon axialement fixe par rapport au corps (202) ou à l'organe d'actionnement (140) et qui est en prise axialement par emboîtement avec au moins un segment de serrage (112; 212) dans une région de couplage (136; 236) entre une région de face de guidage (134b; 234b) de la face de guidage (134; 234), distale en direction axiale (4), et une région de face de guidage (134a; 234a) de la face de guidage (134; 234), proximale en direction axiale.

2. Dispositif de serrage (300; 400) à la manière d'un dispositif de serrage intérieur pour la fixation de pièces, en particulier en vue d'un usinage en rotation, avec
- un corps (302; 402) s'étendant en direction axiale (4),
- un organe d'actionnement (340; 440) mobile en direction axiale par rapport au corps (302; 402) en vue du serrage et du desserrage,
- un mandrin de serrage (330; 430), et
- une multiplicité de segments de serrage (312; 412), qui sont disposés autour du mandrin de serrage (330; 430) pour l'application d'une force à la pièce,
dans lequel
- le mandrin de serrage (330; 430) présente sur son côté extérieur une face de guidage (334; 434) inclinée par rapport à la direction axiale (4) pour chaque segment de serrage (312; 412),
- les segments de serrage (312; 412) présentent respectivement sur leur côté intérieur une face de glissement (316) inclinée par rapport à la direction axiale,
- le mandrin de serrage (330; 430) et la totalité des segments de serrage (312; 412) sont mutuellement déplaçables en direction axiale, afin de produire ainsi un déplacement radial des segments de serrage (312; 412) lors d'un déplacement relatif axial, et
- le mandrin de serrage (330) est axialement fixe sur le corps (302) et les segments de serrage (312) sont axialement fixes sur l'organe d'actionnement (340) ou le mandrin de serrage (412) est axialement fixe sur l'organe d'actionnement (440) et les segments de serrage (412) sont axialement fixes sur le corps (402) ou le mandrin de serrage et les segments de serrage sont couplés à l'organe d'actionnement de telle manière qu'ils soient déplaçables axialement en sens inverse par rapport au corps au moyen de l'organe d'actionnement,
**caractérisé en ce qu'**il est prévu, pour le couplage axialement fixe des segments de serrage (312; 412), sur le corps (402) ou sur l'organe d'actionnement (340) au moins un élément de couplage (340; 440), qui est prévu de façon axialement fixe par rapport au corps (402) ou à l'organe d'actionnement (340) et qui est en prise axialement par emboîtement avec au moins un segment de serrage (312; 412) dans une région de couplage (336; 436) entre une région de face de guidage (334b; 434b) de la face de guidage (334; 434), distale en direction axiale, et une région de face de guidage (334b; 434b) de la face de guidage (334; 434), proximale en direction axiale.

3. Dispositif de serrage (100; 200; 300; 400) selon l'une quelconque des revendications précédentes, **caractérisé en ce que** les segments de serrage (112; 212; 312; 412) forment une couronne de segments de serrage fixement assemblés (110; 210; 310; 410), dans laquelle les segments de serrage individuels sont reliés l'un à l'autre par des segments intermédiaires extensibles tangentiellement (114; 214; 314; 414), dans lequel la couronne de segments de serrage présente de préférence au moins trois, en particulier quatre, six ou huit segments de serrage.

4. Dispositif de serrage (100; 200; 300; 400) selon la revendication 1 ou 2, **caractérisé en ce qu'**il est prévu dans le mandrin de serrage (330; 430) ou dans la douille de serrage (120; 230) au moins un canal de couplage (132; 232; 332; 432) fermé sur sa périphérie, à travers lequel l'élément de couplage (142; 242; 342; 442) est guidé depuis le corps (202; 402) ou l'organe d'actionnement (140; 340) jusque dans la région de couplage (136; 236; 336; 436).

5. Dispositif de serrage (100; 200; 300; 400) selon l'une quelconque des revendications précédentes, **caractérisé en ce qu'**une tige de l'élément de couplage (142; 242; 342; 442) et le canal de couplage (132; 232; 332; 432) sont adaptés l'un à l'autre de telle manière que le jeu transversalement à la direction axiale ne dépasse pas 1 mm.

6. Dispositif de serrage (100; 200; 300; 400) selon la revendication 1 ou 2, **caractérisé en ce qu'**il est prévu par segment de serrage (112; 212; 312; 412) chaque fois un élément de couplage (142; 242; 342; 442) .

7. Dispositif de serrage (100; 200; 300; 400) selon l'une quelconque des revendications précédentes, **caractérisé en ce que** l'élément de couplage (142; 242; 342; 442) présente à son extrémité distale un rétrécissement (144a; 244a; 344a; 444a) et un élargissement (144b; 244b; 344b; 444b) qui s'y raccorde, pour la réalisation d'un assemblage par emboîtement, dans lequel une section transversale de l'élément de couplage ne dépasse de préférence pas la section transversale libre du canal de couplage même dans la région de l'élargissement.

8. Dispositif de serrage (100; 200; 300; 400) selon l'une quelconque des revendications précédentes, **caractérisé en ce que** la totalité des segments de serrage (112; 212; 312; 412) est adaptée au mandrin de serrage (330; 430) ou à la douille de serrage (130; 230), de telle manière qu'un montage des segments de serrage sur le dispositif de serrage à la manière d'un assemblage à baïonnette soit possible.

9. Dispositif de serrage (300; 400) selon la revendication 8, **caractérisé en ce qu'**un anneau de manipulation périphérique commun (370; 470) est associé à la totalité des segments de serrage (312; 412), auquel les segments de serrage sont assemblés sans rotation.

10. Dispositif de serrage (100; 200) selon une des revendications 8 ou 9, **caractérisé en ce qu'**il est prévu sur les faces de glissement (116) des segments de serrage (112; 212) une rainure de montage (120; 220) étendue relativement en direction périphérique.

11. Dispositif de serrage (100; 200) selon la revendication 10, **caractérisé en ce que** la rainure de montage (120; 220) débouche dans une région intermédiaire entre deux segments de serrage voisins (112; 212).

12. Dispositif de serrage (100; 200) selon l'une quelconque des revendications précédentes, **caractérisé en ce qu'**il est prévu sur la face de guidage (134; 234) du mandrin de serrage ou de la douille de serrage (130; 230) une partie de blocage de rotation (138), qui s'étend dans une rainure axiale (122) étendue en direction axiale sur la face de glissement (116) du segment de serrage (112; 212).

13. Dispositif de serrage (100; 200) selon l'une quelconque des revendications précédentes, **caractérisé en ce que** le dispositif de serrage (100; 200) peut être commuté entre un état de fonctionnement et un état de changement, dans lequel la mobilité relative de l'organe d'actionnement et du corps est plus grande dans l'état de changement que dans l'état de fonctionnement.

14. Dispositif de serrage (100; 200) selon la revendication 13, **caractérisé en ce que** la mobilité relative
- est limitée dans l'état de fonctionnement, de telle manière que la partie de blocage de rotation (138) soit toujours disposée dans la rainure axiale (122) dans l'état de fonctionnement, et
- est plus grande dans l'état de changement, de telle manière que la partie de blocage de rotation (138) puisse rentrer jusque dans la rainure de montage (120).

15. Dispositif de serrage (100; 200) selon l'une quelconque des revendications précédentes, **caractérisé en ce que** la face de guidage intérieure (134; 234) de la douille de serrage (130; 230) ou du mandrin de serrage (330; 430) présente une forme de partie de cône se rétrécissant en direction proximale ou en direction distale ou une forme pyramidale négative se rétrécissant en direction proximale.
